# EUROPEAN PATENT APPLICATION

(11) **EP 0 709 290 A1**
(43) Date of publication of application: **01.05.1996**
(21) Application number: 95830457.8
(22) Date of filing: 31.10.1995
(51) Int. Cl.: B65B 35/02, B65B 69/00, B65G 47/51

(54) **Device for feeding articles having irregular shape to a packaging line**

(30) Priority: 31.10.1994 IT BO940473
(71) Applicant: MARCHESINI GROUP S.p.A., I-40065 Pian di Macina Pianoro (Bologna) (IT)
(72) Inventor: Monti, Giuseppe, I-40065 Pianoro (Bologna) (IT)
(74) Representative: Dall'Olio, Giancarlo

(57) **Abstract**

A device for feeding articles (2) having irregular shape to a packaging line (3), includes a storage magazine (5) in which a plurality of boxes (6), filled with piled articles (2), are stored. The magazine (5) features means (14) for transferring a box (6) to an unload station (11). Below the magazine (5), in the unload station (11), there is an unload device (7), featuring means (25,28) that hold a stack of articles (2) going out from the box (6) to be emptied. Stop means (30), connected to the unload device (7), move between a raised position, in which they support the stack of articles (2) during the transfer of a box (6) to the unload station (11), and a lowered position, in which the stack of articles (2) is released so as to enter the unload device (7).

## Description

The present invention relates to a device for feeding articles having irregular shape to a packaging line.

It is known that it is difficult to feed irregularly shaped articles, such as dosage spoons used for medicines and the like, to a packaging line. Producers usually stack them inside boxes.

Then, the articles must be taken out of the boxes and fed, one after another, to the line that inserts them into relative packages.

Obviously, feeding articles should be continuous, so as to suit the continuous working of the packaging line.

Proposed solutions of the problem require complex and huge equipments, that provoke not only high costs, but also complicates the same packaging line.

The object of the present invention is to propose a simple and small device that feeds continuously articles having irregular shape to a packaging line.

The above mentioned object is obtained in accordance with the contents of claims.

The characteristic features of the present invention are pointed out in the following description with reference to the enclosed drawings, in which:
- figure 1 shows a schematic side view of the subject device;
- figures 2a and 2b show, with some parts removed in order to point out others, a front view of the device as seen from the side indicated by the arrow X in fig. 1, respectively in two subsequent stages of a working cycle;
- figure 3 shows a sectional, detailed view of some members of the device;
- figures 4 and 5 show the same view as the figure 5, in subsequent working stages;
- figure 6 shows a detailed sectional view of the above mentioned members taken along the plane VI-VI of figure 4;
- figure 7 shows a vertical sectional view of the above mentioned members of the device, taken along the plane VII-VII of the figure 5.

Referring to the drawings, the reference numeral 1 indicates the device for feeding articles having irregular shapes, in particular dosage spoons 2, to a packaging line 3, that features U-shaped carrier trays 4 provided for transferring the articles to packages.

The device 1 basically includes an upper storage magazine 5 containing boxes 6; the articles 2 to be fed are stored in stacks in the boxes 6. A device 7 is situated below the magazine 4 for unloading the articles 2.

A known withdrawing device 8 cooperates with the unload device 7 and is equipped with, e.g. suction gripping means 9.

The gripping means 9 are driven so as to move between a position in which it withdraws single articles 2 from the unload device 7, and a position 9a in which the same articles 2 are released inside respective carrier trays 4 of the packaging line.

A conveying belt 10 is located under the bottom of the magazine 5 so as to hold a plurality of boxes 6, put one beside another and open on the bottom, and to transfer them one by one to a working station 11, located in correspondence with the above mentioned unload device 7.

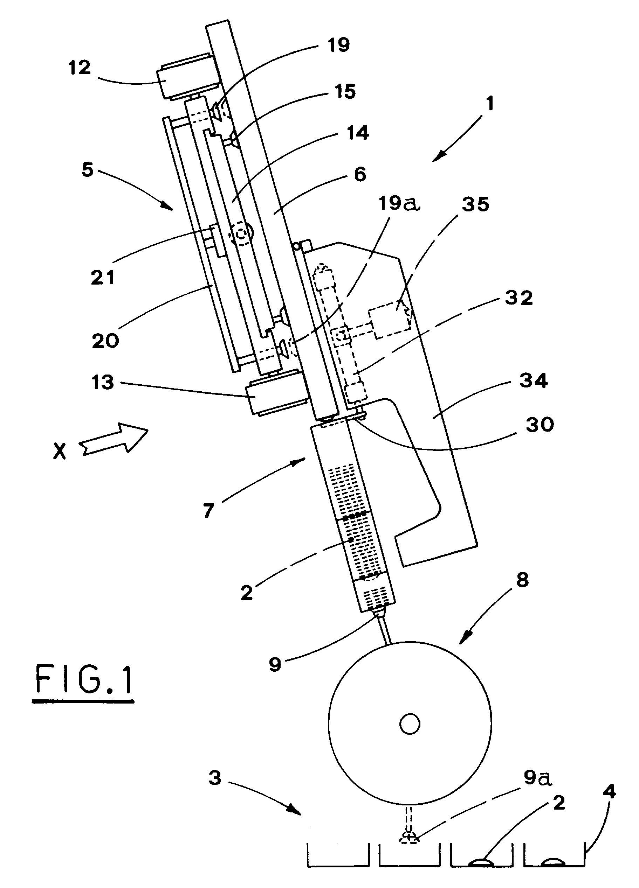

Further conveying belts 12 and 13, that engage the boxes 6 on their front faces, cooperate with the belt 10 in carrying the boxes 6 in a slightly inclined position, with respect to a vertical plane (see fig. 1).

Naturally, the auxiliary belts 12, 13 are operated in synchrony with movement of the conveying belt 10.

It is also possible for the conveying belt 10 to carry the boxes 6 in a substantially vertical position, or to set the boxes in vertical position only when they are located at the unload station 11.

In the last section of their path, the boxes 6 are transferred to the unload station 11 by a slide 14, that features a pair of suction gripping means 15, acting on the front of the box to be transferred.

The slide 14 is slidably supported by a frame 17, integral with the fixed frame structure of the magazine, and is driven in a reciprocating motion by an actuator 18, e.g. pneumatic cylinder.

Two further suction gripping means 19, aimed at blocking the box 6 to be unloaded, are situated in the unload station 11.

The suckers 19 are carried by a cross piece 20 that is moved in direction transversal to the magazine, by a respective actuator 21.

A pair of retractable strikers 22 are situated upstream of the said station 11 to keep the boxes to be unloaded before entering the station 11.

The unload device 7 features a channel member 23 defining a duct 24, along which the articles 2 slide downwards.

Obviously, the duct 24 is in alignment with the box 6 located in the unload station 11.

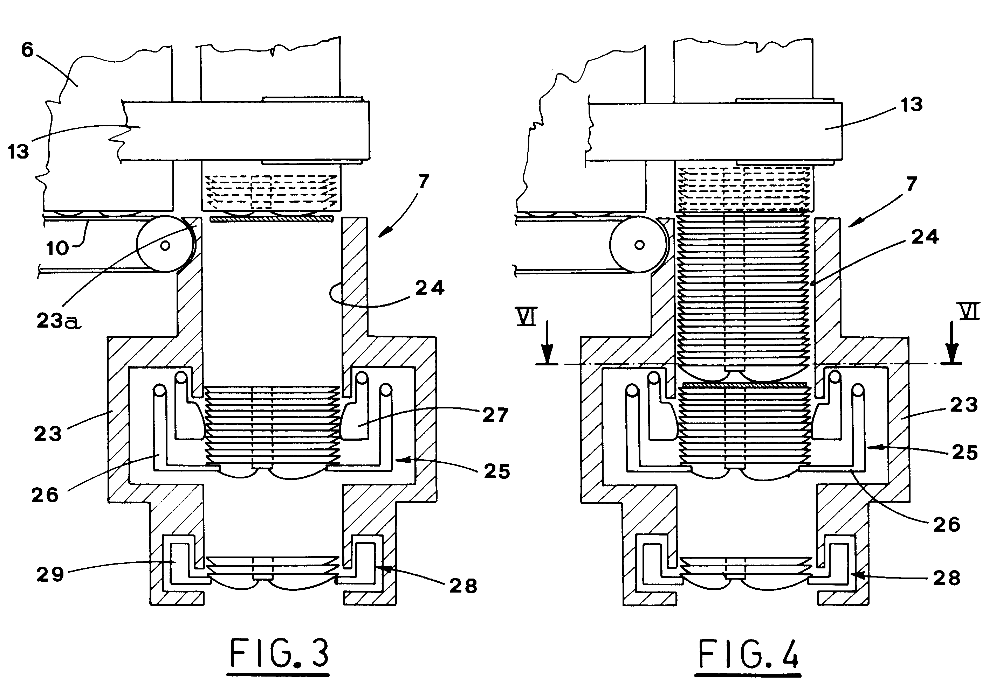

It is to be noted, that a suitably shaped upper part 23a of the member 23 defines a surface linking with the conveying surface of the conveying belt 10 at the entrance of the duct 24 (for more details see fig. 3).

In its central part, the member 23 houses an escapement mechanism 25 that supports a stack of articles to be delivered.

The escapement device 25 features a pair of extensions 26 that open in order to free a predetermined number of articles 2 which thus go down.

Over the extensions 26, there is a pair of clamping members 27 aimed at holding the part of the stack of articles 2 situated over the articles going down when the extensions 26 open.

Under the above mentioned escapement device 25, along the duct 24, the channel member 23 supports another device 28 aimed at keeping a limited number of stacked articles 2, which have just been delivered by the escapement device 25.

The device 28 has a pair of extensions 29 elastically constrained.

A stop plate member 30, fastened to the stem 31 of a jack 32, cooperates with the escapement device 25.

At its top, the jack 32 is hinged, pivoting on a pin 33, to a case 34.

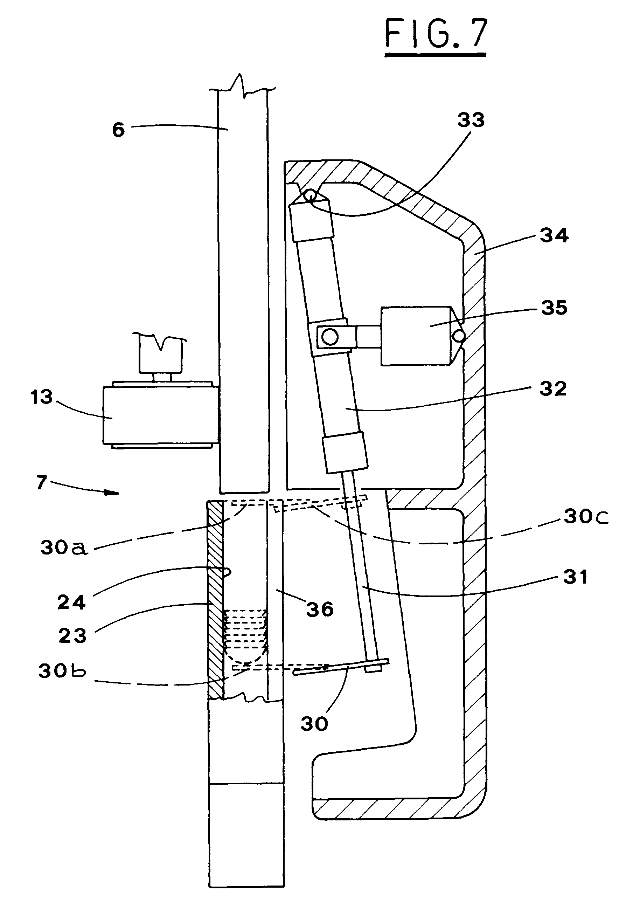

The jack 32 is moved by an actuator 35, hinged to the inside of the case 34 (see fig. 7), and is made oscillate.

The stop plate member 30 enters the duct 24, along which the articles 2 go down, sliding in an opening 36 longitudinally made in the channel member 23.

The boxes 6, stored in magazine 5, are brought, one by one, to the unload station 11, where the articles 2, contained in the boxes, are unloaded.

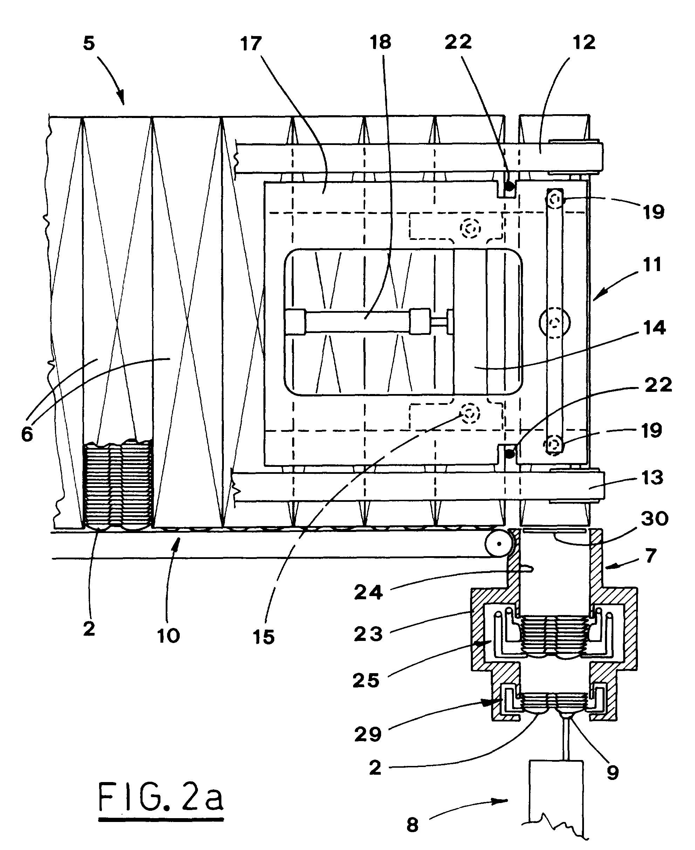

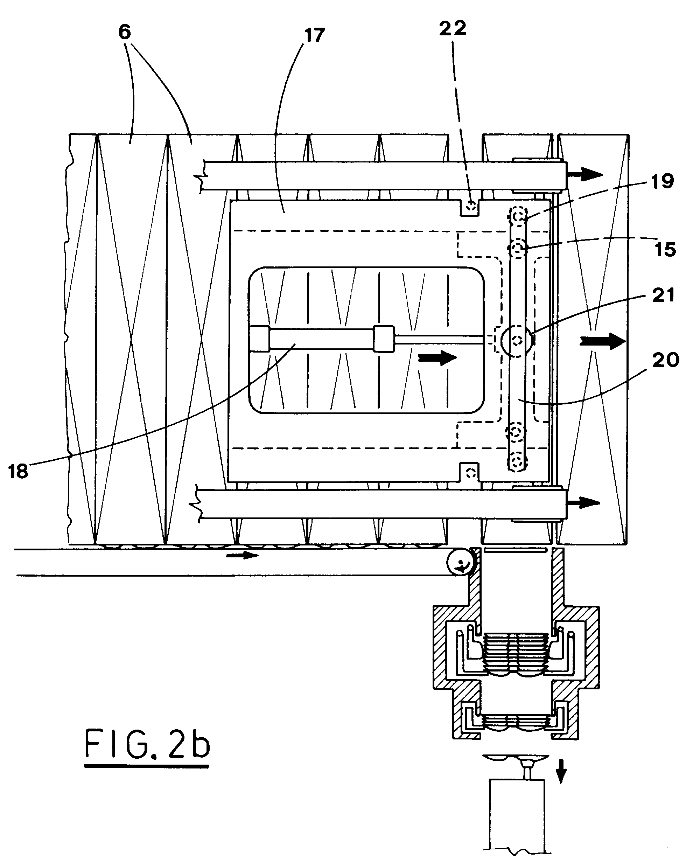

The box to be moved is gripped by the suckers 15, carried by the slide 14 (fig. 2a); as the strikers 22 have been retracted, the activator 18 operates translation of the slide 14 and, consequently, the box of the unload station 11 is transferred and, simultaneously, the box that has already been unloaded, is expelled.

The boxes 6, situated in the magazine 5, are moved by the conveying belt 10 which work together with the belts 12, 13, up to the strikers 22 that are displaced to the position in which they stop the boxes.

In the unload station 11, the box to be unloaded is kept by the suckers 19, moved to the advanced position 19a along with the cross piece 20 (fig. 1).

It is to be noted, that in this stage, the stop plate member 30 is in a raised position, shown with broken line 30a in fig. 7, so as to close the entrance of the duct 24 of the unload device 7.

Consequently, when in the position 30a, the stop plate member 30 is coplanar with the surface defined by the conveying belt 10 and by the upper part 23a of the channel member 23.

Therefore, since the bottom of the box 6 is open, the stop plate member 30 supports the articles 2 to be unloaded, while they are conveyed to the unload station 11 (for more detail see fig. 3).

At this point, the stop plate member 30 is moved downwards along the duct 24, until it reaches the lowered position 30b (fig. 7), in which it is situated just over the articles 2 stacked on the escapement mechanism 25 (fig. 4).

The stop plate member 30, operated by the jack 32, moves down very softly, so as to facilitate the stack of articles 2 while going down suitably guided inside the duct 24, that ideally forms an extension of the box 6 to be emptied.

Moreover, the stop plate member 30 while resting on the articles 2 below, also stabilises the stack.

Afterwards, the jack 32 is made oscillate by the actuator 35, thus extracting the stop plate member 30 from the duct 24; the extraction occurs when the stop plate member 30 is situated in the lowermost position that the jack 32 can determine (fig. 7).

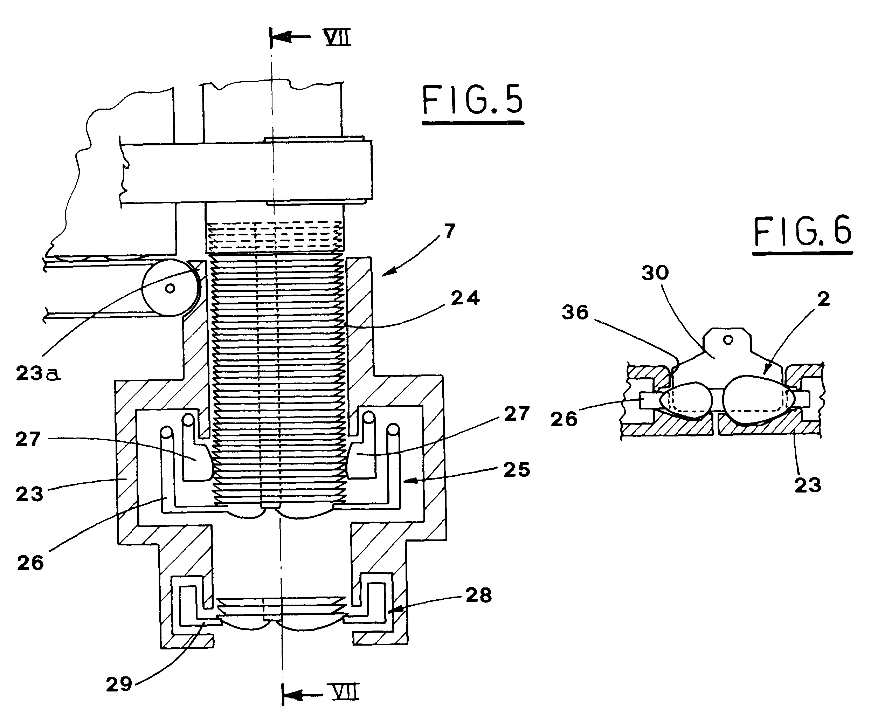

Thus the above mentioned stack goes to rest on the articles still present in the escapement mechanism 25 (fig. 5).

It is to be pointed out, that the duct 24 is suitably shaped so as to follow approximately the profile of the articles 2, in this case dosage spoons each one with two cavities.

The bottom of the so formed stack is supported by the extensions 26 and fastened, over the extensions 26, by the clamp members 27.

When the extensions 26 are opened, the articles situated under the clamp members 27 fall onto the support device 28 below, while the uppermost articles are kept in the stack by the clamp members 27 and are released only when the extensions 26 are in close position again.

Opening of the extensions 26 is suitably controlled by sensors in accordance with the number of articles present on the support device 28.

In this way, it is possible to move small groups of articles 2 to the support device 28, from which they are withdrawn, one by one, by the gripping means 9 of the withdrawing device 8.

This allows to avoid overloading of the support device 28 and, subsequently, allows for better working during the stage of withdrawing of single articles 2.

Obviously, the stack supplied to the unload device 7 gradually runs out of articles 2, because of feeding them to the packaging line 3.

When suitable sensors detect a predetermined minimum level of the stacked articles, a new box is automatically transferred to the unload station 11, so as to restore the same number of articles in the stack.

The stop plate member 30, previously brought to a raised position 30c, inclined with respect to the axis of the duct 24, is moved again to the entrance of the duct 24, to the position 30a, by rotation of the jack 32 operated by the actuator 35.

Therefore, a new cycle of transferring and unloading of one box of articles 2 can start, in the above described way.

An important advantage is that the articles feeding continuity is not interrupted, because unloading of the articles from the boxes and substitution of the unloaded boxes do not stop the feeding.

It is also to be pointed out that the articles are unloaded directly from the boxes in which they are supplied, because the boxes are aligned with the unload device 7, from which the articles are withdrawn one by one.

This feature results in a very simple and small structure of the device, and its reduced cost as well, and therefore it can be integrated into conventional packaging lines.

## Claims

1. Device for feeding articles having irregular shape to a packaging line characterised in that it includes:
a storage magazine (5) that contains a plurality of boxes (6) in each of which a series of articles (2) are stored in stacked condition, said magazine being equipped with means (14) for transferring a box (6) to an unload station (11);
an unload device (7), situated under the storage magazine (5) and in alignment with the said unload station (11), the said unload device being equipped with holding means (25,28) aimed at supporting a stack of articles (2) going out of one of the said box (6) to be unloaded;
support means (30), connected to the said unload device (7) and movable between a raised position in which they support the stack of articles (2) during the transfer of the box (6) to the unload station (11), and a lowered position in which the stack of articles (2) is released to enter the unload device (7).

2. Device according to claim 1, characterised in that the said support means (30) feature a stop plate member (30), supported by reciprocating actuator means (32) which oscillate and are operated between a position in which the stop plate member (30) is axially aligned with the said unload device (7), to support the stack of articles (2) to be unloaded, and an inclined article release position.

3. Device according to claim 1, characterised in that, in the unload station (11), the said box (6) to be unloaded is supported in an almost vertical position and in alignment with the unload device (7) below.

4. Device according to claim 1, characterised in that the magazine (5) is delimited at the bottom by a conveying belt (10) aimed at carrying said plurality of bottom opened boxes (6) situated in the magazine (5) one beside another.

5. Device according to claim 1, characterised in that the said means (14) for transferring the box (6) to be unloaded include a slide (14), equipped with a pair of gripping means (15), acting on the front of the box (6), said slide being guided along a fixed frame (17) by reciprocating actuator means (10).

6. Device according to claim 1, characterised in that in the said unload station (11) there are gripping means (19) for blocking the said box (6) to be unloaded, said gripping means being fastened to a cross piece (20) moved in direction transversal to the said magazine (5) by reciprocating actuator means (21).

7. Device according to claim 1, characterised in that retractable strikers (22), aimed at stopping the boxes to be transferred to the unload station (11), are situated upstream of the said unload station (11).

8. Device according to claim 1, characterised in that the unload device (7) includes a duct (24) aligned with the said box (6) situated at the unload station (11), for the articles (2) going down, with the entrance of the duct (24) aimed at being closed by support means (30) during transferring of the box (6) to the said unload station (11).

9. Device according to claim 1, characterised in that the said unload device (7) has an escapement device (25) for supporting a stack of articles (2) to be delivered in cooperation with clamp members (27) holding an upper part of the same stack, and another device (28) aimed at keeping a limited number of stacked articles (2) which have just been delivered by the escapement device (25).
